# EUROPEAN PATENT APPLICATION

(11) **EP 4 398 461 A1**
(43) Date of publication of application: **10.07.2024**
(21) Application number: 23217166.0
(22) Date of filing: 15.12.2023
(51) Int. Cl.: H02K 9/193, H02K 1/32, H02K 7/00

(54) **ROTOR COOLING STRUCTURE OF A MOTOR**

(30) Priority: 09.01.2023 US 202363478990 P; 04.09.2023 CN 202311132165
(71) Applicant: Delta Electronics, Inc., Taoyuan City 333 (TW)
(72) Inventor: TSAI, Shian-Min, 333 Taoyuan (TW); CHOU, Mu-Hsien, 333 Taoyuan (TW); SU, Yu-Lin, 333 Taoyuan (TW)
(74) Representative: Nederlandsch Octrooibureau

(57) **Abstract**

A motor rotor cooling structure includes a shaft, a rotor (170) with two end plates (160,180). Said shaft includes an inner shaft (190), an outer shaft (185). A first axial flow channel (184) extending between inner and outer shaft. The rotor (170) includes a plurality of stacked silicon steel sheets. Said sheets comprise shaft holes facing the outer surface of the outer shaft (185). Each sheet is recessed in form of a concave groove (175) to form second axial flow channels (187). Two end plates (160,180) are connected to two outermost silicon steel sheets at each axial end of the rotor (170). Each of said end plates is recessed to form a plurality of radially extending third flow channels (161,181). Each third flow channel (161,181) of each end plate (160,180) comprises one nozzle (162,182) to spray the cooling oil onto stator windings.

## Description

### BACKGROUND

### Field of Invention

The present disclosure relates to a motor rotor, and more particularly to a motor rotor cooling structure.

### Description of Related Art

A conventional vehicle motor has a gap between a silicon steel sheet and a shaft to construct a cooling oil circulation channel. However, a conventional cooling oil circulation channel has the disadvantages of poor cooling performance and uneven temperature distribution. In view of such issue, motor manufacturers are actively looking for solutions to effectively improve the cooling oil circulation channel and enhance the performance of the motor.

### SUMMARY

The present disclosure proposes a motor rotor cooling structure for overcoming or alleviating the problems of the prior art.

In one or more embodiments, a motor rotor cooling structure includes a shaft, a rotor and two end plates. The shaft includes an inner shaft, an outer shaft and a first flow channel extending in an axial direction between the inner shaft and the outer shaft. One end of the inner shaft has an inner shaft oil inlet, the inner shaft has an inner shaft oil outlet connected to the first flow channel, wherein an outer shaft oil outlet is located at a middle point in the axial direction on an outer surface of the outer shaft to be connected to the first flow channel. The rotor includes a plurality of stacked silicon steel sheets, all the silicon steel sheets have respective shaft holes aligned and connected with each other for the shaft to pass through, and the aligned and connected shaft holes have an inner surface, which faces the outer surface of the outer shaft and is recessed to form a concave groove for a second flow channel connected to the outer shaft oil outlet and extending in the axial direction. Two end plates are connected to two outermost silicon steel sheets of the stacked silicon steel sheets in the axial direction respectively. The two end plates have respective sides, which face the two outermost silicon steel sheets and are recessed to form third flow channels extending in a radial direction from a corresponding end plate shaft hole respectively, and the third flow channels are connected to both axial ends of the second flow channel. Each of the two end plates has at least one nozzle, which is connected to a corresponding one of the third flow channels such that a cooling oil is sequentially flowed through the first flow channel, the second flow channel, the third flow channels and then output from the at least one nozzle.

The motor rotor cooling structure disclosed herein has first, second, and third flow channels in the shaft, rotor silicon steel sheets and end plates, and these flow channels are connected with each other in pairs to allow the cooling oil to flow. Therefore, a motor rotor can be cooled more efficiently and evenly with reducing cooling oil leakage and simultaneously cooling the stator windings.

It is to be understood that both the foregoing general description and the following detailed description are by examples, and are intended to provide further explanation of the invention as claimed.

### BRIEF DESCRIPTION OF THE DRAWINGS

The invention can be more fully understood by reading the following detailed description of the embodiment, with reference made to the accompanying drawings as follows:
Fig. 1 illustrates a first perspective view of a motor cooling system according to some embodiments of the present disclosure;
Fig. 2 illustrates a second perspective view of a motor cooling system according to some embodiments of the present disclosure;
Fig. 3 illustrates an exploded view of a motor rotor cooling structure according to some embodiments of the present disclosure;
Fig. 4 illustrates a cross-sectional view of a motor rotor cooling structure according to according to some embodiments of the present disclosure;
Fig. 5 illustrates a perspective view of a motor rotor cooling structure with a rotor removed according to some embodiments of the present disclosure;
Fig. 6 illustrates how cooling fluid flow in a motor rotor cooling structure according to some embodiments of the present disclosure;
Fig. 7 illustrates a planar view of a rotor silicon steel sheet stack according to some embodiments of the present disclosure;
Fig. 8 illustrates a cross-sectional view of a end plate with a shaft of a motor rotor cooling structure according to some embodiments of the present disclosure; and
Fig. 9 illustrates a perspective view of an end plate of a motor rotor cooling structure according to some embodiments of the present disclosure.

### DETAILED DESCRIPTION

Reference will now be made in detail to the present embodiments, examples of which are illustrated in the accompanying drawings. Wherever possible, the same reference numbers are used in the drawings and the description to refer to the same or like parts.

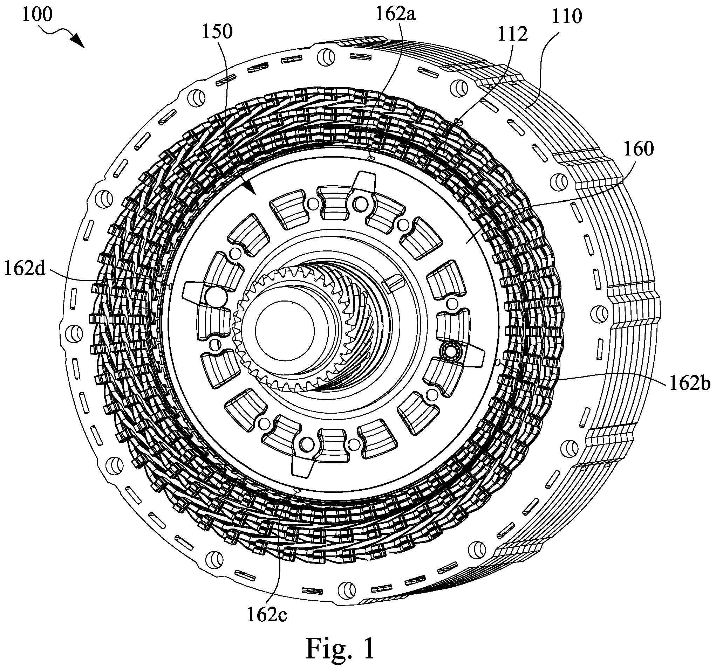

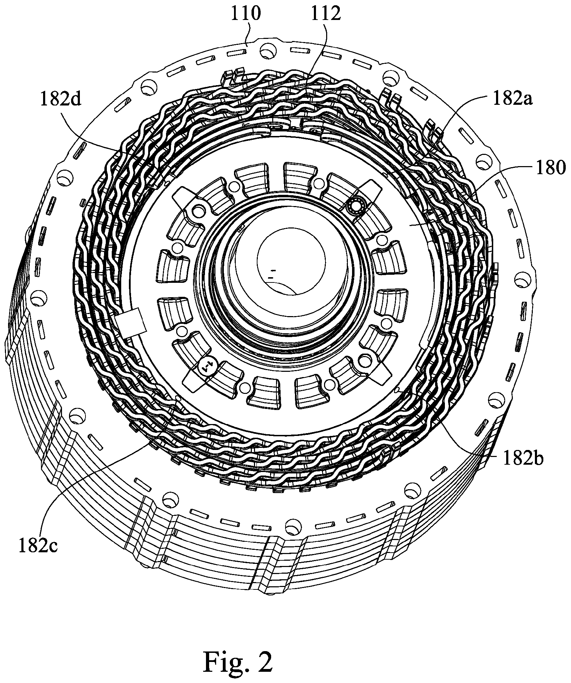

Reference is made to Figs. 1 and 2, Fig. 1 illustrates a first perspective view of a motor cooling system according to some embodiments of the present disclosure, and Fig. 2 illustrates a second perspective view of a motor cooling system according to some embodiments of the present disclosure. A motor cooling system 100 includes a stator silicon steel sheet stacking structure 110 and a motor rotor cooling structure 150. When a motor is operating, the motor rotor cooling structure 150 is arranged radially inside the stator silicon steel sheet stacking structure 110 and rotatable. The motor rotor cooling structure 150 has two end plates (160, 180) at both ends in an axial direction. The end plate 160 has four nozzles (162a, 162b, 162c, 162d) distributed at equal intervals around the end plate 160. The end plate 180 has four nozzles (182a, 182b, 182c, 182d) distributed at equal intervals around the end plate 180. The four nozzles (162a, 162b, 162c, 162d) of the end plate 160 face inner-layered windings of the stator windings 112 of the stator silicon steel sheet stacking structure 110 on one side. These windings 112 are located between an inner circumference of the stator silicon steel sheet stacking structure 110 and the rotor. The four nozzles (182a, 182b, 182c, 182d) of the end plate 180 face inner-layered windings of the stator windings 112 of the stator silicon steel sheet stacking structure 110 on the other side. When the motor is operating, the cooling oil circulated within motor rotor cooling structure 150 is output to the inner-layered windings through the nozzles (162a, 162b, 162c, 162d, 182a, 182b, 182c, 182d) to enhance heat disspation for the stator silicon steel sheet stacking structure 110.

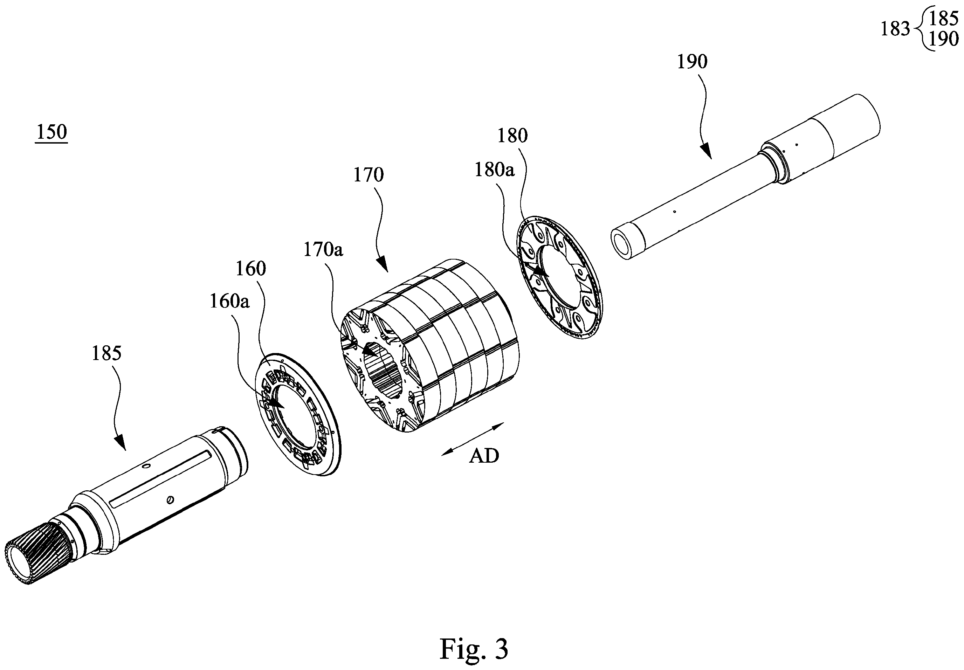

Reference is made to Fig. 3, which illustrates an exploded view of a motor rotor cooling structure according to some embodiments of the present disclosure. A shaft 183 of the motor rotor cooling structure 150 includes an inner shaft 190 and an outer shaft 185 which are assembled together. The rotor 170 of the motor rotor cooling structure 150 is composed of a plurality of silicon steel sheets stacked in the axial direction. The stacked silicon steel sheets have respective shaft holes 170a aligned and connected with each other when the silicon steel sheets are stacked for the shaft 183 passing through, i.e., the shaft 183 passes through the stacked silicon steel sheet structure of the rotor 170 through the aligned and connected shaft holes 170a. The two end plates (160, 180) of the motor rotor cooling structure 150 are connected to two outermost silicon steel sheets of the stacked silicon steel sheets from both ends of the shaft 183 of the rotor 170 respectively. The two end plates (160, 180) have respective end plate shaft holes (160a, 180a) for two corresponding ends of the shaft 183 to pass through.

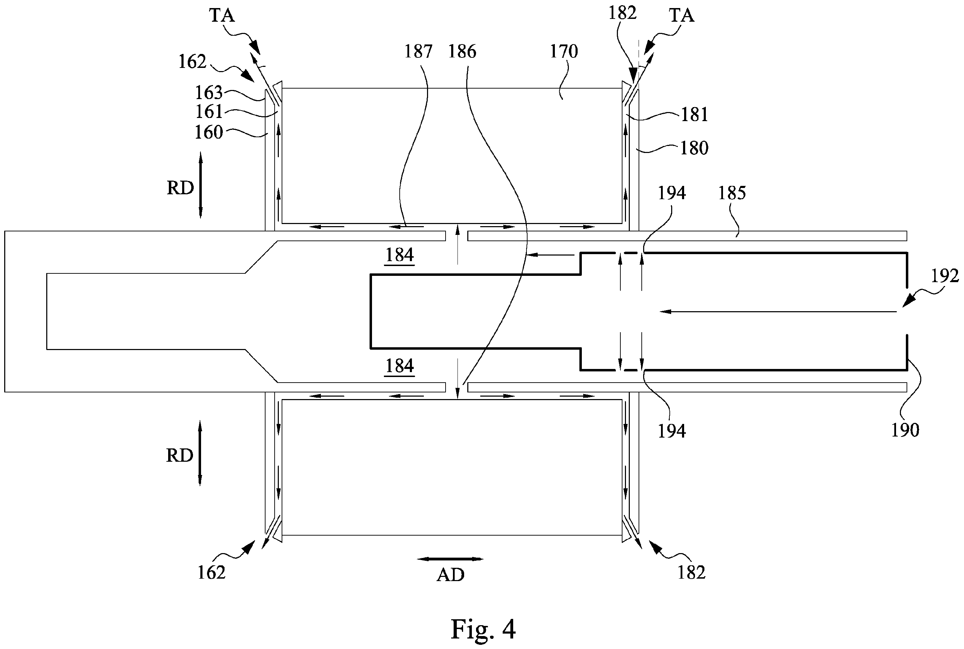

Reference is made to Fig. 4, which illustrates a cross-sectional view of a motor rotor cooling structure according to according to some embodiments of the present disclosure. When the motor is operating, the cooling oil is entered into the inner shaft 190 from an inner shaft oil inlet 192 at one end of the inner shaft 190 in the direction of the arrow, flowed toward the other end, and entered into the first flow channel 184 through at least one inner shaft oil outlet 194 of the inner shaft 190. In some embodiments of the the present disclosure, the inner shaft 190 has four inner shaft oil outlets 194. The first flow channel 184 is a flow channel extending in the axial direction AD between the inner shaft 190 and the outer shaft 185. The cooling oil is then output from the first flow channel 184 to the second flow channel 187 through at least one outer shaft oil outlet 186 of the outer shaft 185. The second flow channel 187 is formed between concave grooves of the stacked silicon steel sheets of the rotor 170 and the outermost surface of the outer shaft 185. Therefore, when the cooling oil flows in the second flow channel 187, the heat disspation for the stacked silicon steel sheets of the rotor 170 is enhanced. The cooling oil flows from the outer shaft oil outlet 186 through the first flow channel 184 into the second flow channel 187, and then flows through the second flow channel 187 in the axial direction AD toward both ends of the shaft 183. In some embodiments of the present disclosure, the outer shaft oil outlets 186 are located at a plurality of center points or a plurality of middle points of the second flow channels 187, that is, approximately located at a middle point of the outermost surface of the outer shaft 185 in the axial direction AD, or corresponds to the middle point of the stacking structure of the rotor 170 in the axial direction AD. Such oil outlet structure allows the cooling oil to be flowed from the outer shaft oil outlet 186 into the second flow channel 187 at a constant speed and evenly distributed between the outer surface of the shaft 183 and the stacking structure of the rotor 170 (i.e. the second flow channel 187), and is output to two end plates (160, 180) on both sides in the axial direction AD respectively, thereby improving a conventional problem of uneven distribution of the oil circuit or uneven temperature at both ends (i.e., the oil inlet end and the oil outlet end) of the stacking structure of the rotor 170 and the shaft 183 along the axial direction AD, which is caused by the cooling oil enters from the end plate on one side and then flows to the end plate on the other side in the axial direction. Then, the cooling oil is flowed from the second flow channel 187 to a plurality of third flow channels (161, 181) of the two end plates (160, 180). The third flow channels (161, 181) are respectively recessed on the sides of the two end plates (160, 180) facing the two outermost silicon steel sheets of the rotor 170. The two end plates (160, 180) have a plurality of nozzles (162, 182) respectively located on the sides of the two end plates facing away from the two outermost silicon steel sheets of the rotor 170 and connected to the corresponding third flow channels ( 161, 181) to be fluidly communicable. In other words, the third flow channels 161 and the corresponding nozzles 162 are located on two opposite sides of the end plate 160 in the axial direction AD and connected to each other to be fluidly communicable, and the third flow channels 181 and the corresponding nozzles 182 are located on two opposite sides of the end plate 180 in the axial direction AD and connected to each other to be fluidly communicable. The nozzles (162, 182) are connected to the corresponding third flow channels (161, 181), so that the cooling oil is flowed through the first flow channel 184, the second flow channel 187, and the third flow channels (161, 181) in sequence, and then flowed through the nozzles (162, 182), and then output and sprayed to the inner-layered windings of the stator windings 112. In some embodiments of the present disclosure, the third flow channels (161, 181) extend in the radial direction RD of the two end plates (160, 180), so they are approximately perpendicular to the second flow channel 187 and distributed at equal intervals around an circumference of the end plates 160, 180.

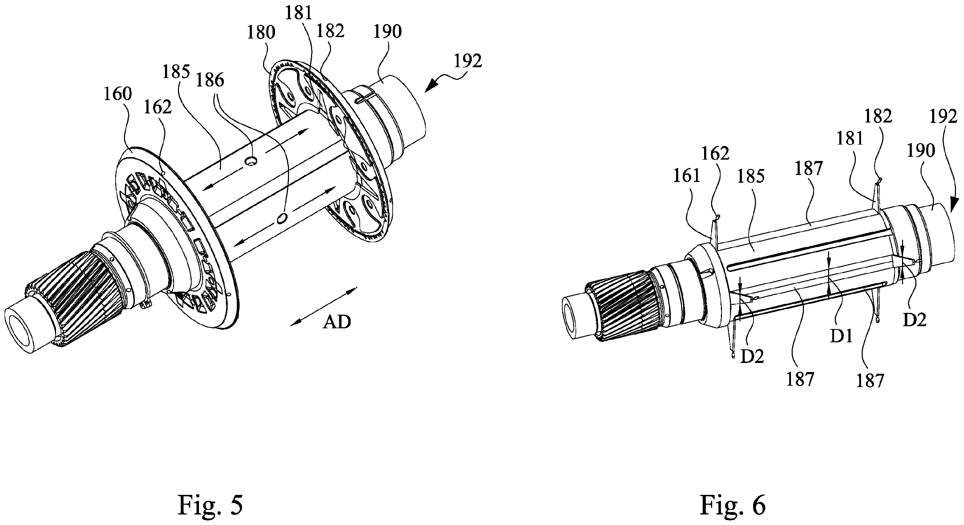

Reference is made to Fig. 5 and Fig. 6, Fig. 5 illustrates a perspective view of a motor rotor cooling structure with a rotor removed according to some embodiments of the present disclosure, and Fig. 6 illustrates how cooling fluid flow in a motor rotor cooling structure according to some embodiments of the present disclosure. In some embodiments of the present disclosure, the two end plates (160, 180) include four third flow channels (161, 181) respectively, but Fig. 6 only shows three of the third flow channels (161, 181) due to the view point. The eight third flow channels (161, 181) of the two end plates (160, 180) are connected with the corresponding four second flow channels 187 respectively at both ends of the shaft 183 in the axial direction AD to be fluidly communicable. Specifically, the four second flow channels 187 are connected to the first flow channel in the rotating shaft (for example, the first flow channel 184 in Fig. 4) through the corresponding four outer shaft oil outlets 186 on the outer surface of the outer shaft 185. In some embodiments of the present disclosure, each of the second flow channels 187 has a fixed width D1, and the third flow channels (161, 181) have multiple widths that are tapered from the end plate shaft hole (160a, 180a) to the outer circumference of the end plates (160, 180) in the radial direction RD, and the fixed width D1 of the second flow channel 187 is equal to a maximum width D2 of the third flow channels (161, 181) where the third flow channel is closest to the end plate shaft holes (160a, 180a) and intersected with the second flow channel 187, such that there is a smaller flow resistance for the cooling oil flowed through the second flow channel 187 in the axial direction AD and turned into the third flow channels (161 , 181) in the radial direction RD.

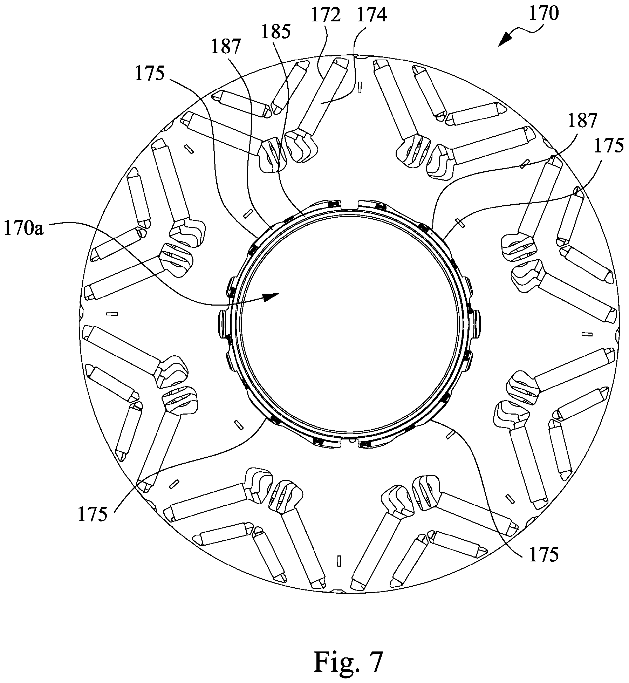

Reference is made Fig. 7, which illustrates a planar view of a rotor silicon steel sheet stack according to some embodiments of the present disclosure. Each silicon steel sheet of the silicon steel sheet stacking structure of the rotor 170 has a plurality of magnet slots 172 and a plurality of magnets 174 located in the magnet slots 172. The magnet slots 172 are conventionally utilized as cooling oil flow channels. However, due to the misalignment between layers of the magnets and large gaps between the magnets and the magnet slots 172, it is easy to cause cooling oil leakage when the motor is operating. In order to deal with such issue, the magnet slots 172 are farther away from the shaft hole 170a in the radial direction RD than the concave grooves 175 of the stacked silicon steel sheets. The second flow channels 187 are formed between a plurality of concave grooves 175 of the stacked silicon steel sheets and the outer surface of the outer shaft 185 respectively. Therefore, the cooling oil flowing in the second flow channel 187 is farther from an outer circumference of the stacked silicon steel sheet than the magnet slot 172. Therefore, the cooling oil is basically flowed between the shaft 183 and the stacked silicon steel sheet, rather than flowed in the magnet slots 172 in conventional designs. When the motor is operating (i.e., the rotor 170 rotates), the cooling oil flowing in the second flow channel 187 has a relatively small centrifugal force such that it is less likely for the cooling oil to leak from gaps between adjacent silicon steel sheets.

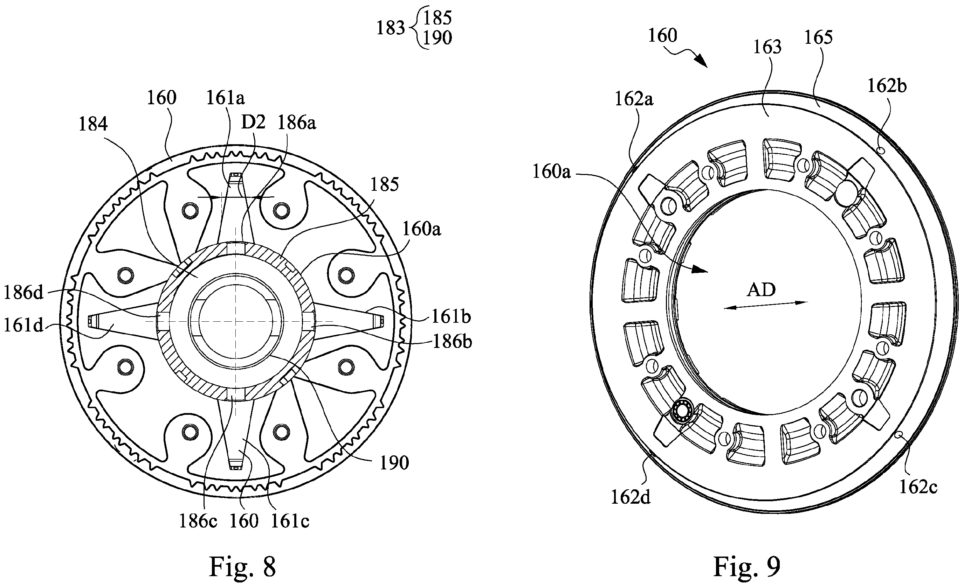

Reference is made to Fig. 8, which illustrates a cross-sectional view of an end plate 160 with a shaft 183 of a motor rotor cooling structure 150 according to some embodiments of the present disclosure. This cross-sectional view is taken along the outer shaft oil outlet 186 of the outer shaft 185. The first flow channel 184 is formed between the inner shaft 190 and the outer shaft 185. The four outer shaft oil outlets (186a, 186b, 186c, 186d) of the outer shaft 185 are all connected to the first flow channel 184 to output the cooling oil, and these outer shaft oil outlets (186a, 186b, 186c, 186d) are on located symmetrically on the outer surface of the outer shaft 185. In some embodiments of the present disclosure, a connection line (referring to the dotted line in the figure) between two outer shaft oil outlets (186a, 186c) is substantially perpendicular to a connection line (referring to the dotted line in the figure) between the other two outer shaft oil outlets (186b, 186d). The four outer shaft oil outlets (186a, 186b, 186c, 186d) of the outer shaft 185 are connected to four corresponding third flow channels (161a, 161b, 161c, 161d) to be fluidly communicable. In some embodiments of the present disclosure, the four outer shaft oil outlets (186a, 186b, 186c, 186d) of the outer shaft 185 are aligned with the four third flow channels (161a, 161b, 161c, 161d) of the end plate 160 respectively when viewed in the axial direction. In some embodiments of the present disclosure, the four third flow channels (161a, 161b, 161c, 161d) of the end plate 160 divide an outer circumference of the end plate shaft hole 160a into four equal parts, that is, the four third flow channels (161a, 161b, 161c, 161d) are evenly and symmetrically recessed on one side of the end plate 160 to circulate the cooling oil. In some embodiments of the present disclosure, each third flow channel (161a, 161b, 161c, 161d) has a width D2 that tapers radially from the end plate shaft hole 160a. In other words, each third flow channel (161a, 161b, 161c, 161d) has a maximum width where the third flow channel is connected with the end plate shaft hole 160a, and a minimum width at its radial end adjacent to an outer circumference of the end plate 160. The design of the tapered width of the third flow channel 161 fasiliates to increase the flow rate of the cooling oil when the motor rotor cooling structure 150 rotates, which is beneficial to increase the flow rate of the nozzles (162a, 162b, 162c, 162d) (please also refer to Fig. 5 or Fig. 9). The third flow channels 181 and shaft 183 of the other end plate 180 also have the same related designs and structures, and further figure and explanation is omitted.

Reference is made to Fig. 9, which illustrates a perspective view of an end plate 160 of a motor rotor cooling structure 150 according to some embodiments of the present disclosure. The four nozzles 162 of the end plate 160 are connected to the ends of the four third flow channels (161a, 161b, 161c, 161d) respectively in Figure 8. In some embodiments of the present disclosure, the end plate 160 includes an annular end surface 163 and an annular inclined surface 165. The annular end surface 163 is connected to an outer circumference of the end plate shaft hole 160a. The annular inclined surface 165 is connected to an outer circumference of the annular end surface 163. The annular end surface 163 is generally perpendicular to the axial direction AD or generally perpendicular to the outer surface of the outer shaft 185 (please also refer to Fig. 5). In some embodiments of the present disclosure, the annular inclined surface 165 is inclined from the outer circumference of the annular end surface 163 toward an outer circumference of the end plate 160, and is not perpendicular to the axis AD, nor parallel to the outer surface of the outer shaft 185 (please also refer to Fig. 5) . The four nozzles (162a, 162b, 162c, 162d) are equally spaced on the annular inclined surface 165. This structure facilitates a stamping process of the metal end plate 160, and the finished nozzles are not exposed on the annular inclined surface 165. The inclination of the annular inclined surface 165 is used to control a direction of the openings of the nozzles (162a, 162b, 162c, 162d) so that they can accurately face the inner-layered windings of the stator windings 112 (please also refer to Fig. 1). In some embodiments of the present disclosure, the nozzles (162a, 162b, 162c, 162d) face the stator windings 112 of the motor, and have an inclination angle TA relative to the annular end surface 163 and the inclination angle TA ranges from 20° to 35° respectively, and the inclination angle TA would be preferably at 28°(please also refer to Figure 4). The other end plate 180 also has the same designs and structures for the nozzles, annular inclined surface and annular end surface, and further figure and explanation is omitted.

The motor rotor cooling structure disclosed herein has first, second, and third flow channels in the shaft, rotor silicon steel sheets and end plates, and these flow channels are fluid-communicably connected with each other in pairs to allow the cooling oil to flow. Therefore, a motor rotor can be cooled more efficiently and evenly with reducing cooling oil leakage and simultaneously cooling the stator windings.

## Claims

1. A motor rotor cooling structure (150), comprising:
a shaft (183) comprising an inner shaft (190), an outer shaft (185) and at least one first flow channel (184) extending in an axial direction (AD) between the inner shaft (190) and the outer shaft (185), one end of the inner shaft (190) having an inner shaft oil inlet (192), the inner shaft (190) having an inner shaft oil outlet (194) connected to the first flow channel (184), wherein at least one outer shaft oil outlet (186) is disposed at a middle point in the axial direction (AD) on an outer surface of the outer shaft (185) to be connected to the first flow channel (184);
a rotor (170) comprising a plurality of stacked silicon steel sheets, all the silicon steel sheets have respective shaft holes (170a) aligned and connected with each other for the shaft (183) to pass through, and the aligned and connected shaft holes (170a) have an inner surface, which faces the outer surface of the outer shaft (185) and is recessed to form at least one concave groove (175) for at least one second flow channel (187) connected to the outer shaft oil outlet (186) and extending in the axial direction (AD); and
two end plates (160, 180) connected to two outermost silicon steel sheets of the stacked silicon steel sheets in the axial direction (AD) respectively, the two end plates (160, 180) have respective sides, which face the two outermost silicon steel sheets and are recessed to form third flow channels (161, 181) extending in a radial direction (RD) from a corresponding end plate shaft hole (160a, 180a) respectively, and the third flow channels (161, 181) are connected to both axial ends of the second flow channel (187),
wherein each of the two end plates (160, 180) has at least one nozzle (162a, 162b, 162c, 162d, 182a, 182b, 182c, 182d), which is connected to a corresponding one of the third flow channels (161, 181) such that a cooling oil is sequentially flowed through the first flow channel (184), the second flow channel (187), the third flow channels (161, 181) and then output from the at least one nozzle (162a, 162b, 162c, 162d, 182a, 182b, 182c, 182d).

2. The motor rotor cooling structure (150) of claim 1, wherein each of the stacked silicon steel sheets has a plurality of the concave grooves (175) in respective shaft holes (170a) to form a plurality of the second flow channels (187), and the two end plates (160, 180) respectively include a plurality of the third flow channels (161, 181) corresponding to the second flow channels (187), the third flow channels (161, 181) of each end plate (160, 180) are arranged symmetrically along an outer circumference of the corresponding end plate shaft holes (160a, 180a).

3. The motor rotor cooling structure (150) of claim 2, comprising a plurality of outer shaft oil outlets (186) corresponding to the second flow channels (187), the plurality of outer shaft oil outlets (186) are located at the middle points along the axial direction (AD) on the outer surface of the outer shaft (185), and arranged symmetrically around the outer surface of the outer shaft (185).

4. The motor rotor cooling structure (150) of claim 3, comprising four outer shaft oil outlets (186), and a first connection line between two of the four outer shaft oil outlets (186) is perpendicular to a second connection line between the other two of the four outer shaft oil outlets (186).

5. The motor rotor cooling structure (150) of claim 1, wherein the nozzles (162a, 162b, 162c, 162d, 182a, 182b, 182c, 182d) are located on sides of the two end plates (160, 180) facing away from the two outermost silicon steel sheets.

6. The motor rotor cooling structure (150) of claim 1, wherein each of the two end plates (160, 180) further comprises an annular end surface and an annular inclined surface, the annular end surface is connected to an outer circumference of the corresponding end plate shaft hole (160a, 180a), the annular inclined surface is connected to an outer circumference of the annular end surface, wherein the annular end surface is perpendicular to the outer surface of the outer shaft (185), and the nozzles (162a, 162b, 162c, 162d, 182a, 182b, 182c, 182d) are disposed on the annular inclined surface.

7. The motor rotor cooling structure (150) of claim 6, wherein the nozzles (162a, 162b, 162c, 162d, 182a, 182b, 182c, 182d) face stator windings (112), and have an inclination angle (TA) ranging from 20° to 35° relative to the annular end surface respectively.

8. The motor rotor cooling structure (150) of claim 7, wherein the stator windings (112) are located between an inner circumference of a stator silicon steel sheet stacking structure (110) and the rotor (170), and the nozzles (162a, 162b, 162c, 162d, 182a, 182b, 182c, 182d) are configured to output the cooling oil toward inner-layered windings of the stator windings (112).

9. The motor rotor cooling structure (150) of claim 1, wherein the second flow channel (187) has a fixed width, and each third flow channel (161, 181) has a plurality of widths tapered radially from the corresponding end plate shaft hole (160a, 180a), wherein the fixed width of the second flow channel (187) is equal to a maximum one of the widths of each third flow channel (161, 181).

10. The motor rotor cooling structure (150) of claim 1, wherein each of the stacked silicon steel sheets has a plurality of magnet slots that are radially farther from the shaft holes (170a) than the concave groove (175).
